# EUROPEAN PATENT APPLICATION

(11) **EP 4 393 597 A1**
(43) Date of publication of application: **03.07.2024**
(21) Application number: 22216769.4
(22) Date of filing: 27.12.2022
(51) Int. Cl.: B01L 3/02, G01N 35/10

(54) **PIPETTE TIP ADAPTER**

(71) Applicant: TECAN Trading AG, 8708 Männedorf (CH)
(72) Inventor: SAGER, ADRIAN, 8708 Männedorf (CH); OTT, PHILIPP, 8496 Steg (CH); FREI, LUCA, 8640 Rapperswil (CH)
(74) Representative: Troesch Scheidegger Werner AG

(57) **Abstract**

A pipette tip adapter (1) detachably connectable between a pipetting device (10) and a pipette tip (15), comprising a body (2) with an interior compartment (7) for holding a liquid (18), a recess (3) entering into a part of the body (2) for detachably receiving a connector (11) of the pipetting device (10) and having a frist opening (5) pneumatically connected with the interior compartment (7). The pipette tip adapter (1) further comprising a tube section (4) projecting from the pipette tip adapter (1) detachably securable with a pipette tip (15) and having a second opening (6) hydraulically connected with the interior compartment (7). Use of such a pipette tip adapter (1) in an automated pipetting system (100), and an automated pipetting system (100) comprising such a pipette tip adapter (1) for preparing liquid reactions.

## Description

The invention relates to a pipette tip adapter connecting a pipette tip to a pipette or a pipetting head of an automated pipetting system.

Commonly used primary sample tubes usually have an inner diameter of 9 to 13 mm. Many applications in molecular biology and biochemistry require more than 1 ml to be pipetted from such sample tubes. There are 5 ml disposable pipette tips available (e.g., from Tecan), however these have an outer diameter of more than 14 mm and therefore are not suitable for pipetting from or to such tubes. Sample tubes are accessible with 1 ml disposable tips, however for volumes larger than 1 ml, repeated pipetting steps are required.

The distance between worktable and pipetting head in automated pipetting devices is limited. An enlarged disposable tip in the classical tip design would therefore have to be wide rather than long to receive a larger volume. However, a pipette tip with a large outer diameter would prevent a low packaging density. Also, such a tip would require a larger tip cone, which is the tube section allowing the tip to be fixed to the pipetting head or pipetting device.

There is a need for a pipette tip or device that makes it possible to increase the maximum volume that can be transferred with one pipette tip in one or a few steps, while able to access primary sample tubes and allowing high packaging density in three dimensions.

WO2012097165A1 discloses a pipette tip for simultaneous use with a plurality of like pipette tips in an automated pipetting system for aspirating, accurately measuring and dispensing a large volume of a liquid. The lower portion of the pipette tip is elongated and being sized and shaped for insertion into a test-tube, while the central portion of the pipette tip is enlarged with respect to both the upper and lower portions of the pipette tip with a width significantly greater than the diameter of the lower portion of the pipette tip to allow the pipette tip to hold the large volume of the liquid. While such a pipette tip allows pipetting large volumes from or to commonly used primary sample tubes, the dimensions required limits their use on worktables of automated pipetting devices and prevents packaging at high densities.

WO1993024232A1 discloses a pipette tip comprising a hollow body defining a reservoir with channels extending from a fluid intake opening to a fluid overflow opening, with the volume between intake opening and overflow opening being calibrated. While such a pipette tip allows pipetting large volumes from commonly used primary sample tubes, it is not suitable for dispensing the received liquids from the reservoir.

WO2015155317A1 discloses a device for use in the lower part of a multi-channel pipetting system that will take samples of large volume of liquid, while having a small footprint and a satisfying ergonomics. This device allows pipetting large volumes from and to commonly used primary sample tubes, however it uses up too much space and lacks compatibility with existing pipetting systems due to the multi-channel principle with at least two pipette tips driven in parallel.

Taken together known solutions for pipetting large volumes with disposable pipette tips include tip enlargements and reservoirs, however these solutions require the pipette tips to be too long for most applications as well as for storage and dense packaging. Alternative solutions include repeated pipetting with a 1 ml tip with the disadvantage of dramatically slowing down any process. Also, when de-capping and piercing is involved, the use of fixed tips bears the risk of cross-contamination, while the use of a classical disposable tip design with larger cones requires the positioning of liquid containers on a lower deck. In addition, most solutions in the state of the art are not functional with existing automated pipetting and liquid handling systems, respectively.

It is thus an object of the present invention to provide for a device that allows the pipetting of larger volumes of liquids with a commonly used or known disposable pipette tip in and out of narrow tubes, while enabling high packaging density in three dimensions, including a compact design shortening the height along the longitudinal axis.

This is solved by a pipette tip adapter according to claim 1. Preferred embodiments can, for example, be derived from the respective dependent claims.

The invention relates to a pipette tip adapter for enlarging the total volume that can be transferred with one disposable pipette tip. One exemplary application is the preparation of nucleic acid reactions for medical therapies from a large number of human samples, using an automated pipetting platform. Further applications are the preparation of liquid biopsies (blood aliquoting), biobanking, cell free DNA extraction, plasmid extraction (e.g., maxi prep), cell culturing, water testing, bioprocessing, protein purification, and gene therapy including mRNA production.

The pipette tip adapter detachably connectable between a pipetting device and a pipette tip according to the invention comprises a body with an interior compartment for holding a liquid, and a recess entering into a part of the body for detachably receiving a connector of the pipetting device and having a frist opening pneumatically connected with the interior compartment. The pipette tip adapter according to the invention further comprises a tube section projecting from the pipette tip adapter detachably securable with a pipette tip and having a second opening hydraulically connected with the interior compartment. The invention includes the use of a pipette tip adapter according to the invention in an automated pipetting system, and an automated pipetting system comprising such a pipette tip adapter for preparing liquid reactions.

The body for holding a liquid according to the invention serves as a reservoir between the pipette or instrument connecter and the pipette tip. This reservoir enlarges the pipetting volume of a regular pipette tip. A regular tip with a diameter compatible with the liquid container from which liquid is aspirated or dispensed to can be mounted on the adapter. The liquid volume exceeding the volume of the regular pipette tip may be taken up by the reservoir, i.e., by the interior compartment in the body of the pipette tip adapter.

In an embodiment according to the invention the pipette tip adapter may hold a volume of up to 4 ml, which together with a 1 ml tip results in a total working volume of 5 ml. In another embodiment according to the invention the pipette tip adapter may hold a volume of up to 9 ml, which together with a 1 ml tip results in a total working volume of 10 ml.

The pipette tip adapter according to the invention may be made of any material that can be formed, pressed, assembled, cast, or printed as needed. In an embodiment, the body may be transparent at least in part, so that the workflow can be monitored and adjusted if necessary. The pipette tip adapter according to the invention may comprise any part that is disposable or may in its entirety be a single-use product.

The pipette tip adapter according to the invention comprises a first opening and a second opening located on opposite sides of the body, arranged such that they are connected by a continuous flow path. The first opening is pneumatically connected with the interior compartment. Pneumatically connected according to the invention means being connected in a way that air or any gas can flow inside the connection such that air or gas pressure can be used to drive aspiration and dispensing of liquids.

According to the invention a tube section is part of the body. It comprises the second opening and is formed such that a pipette tip or any other tool can reversibly be secured to the pipette tip adapter, e.g., by friction fit. The second opening is hydraulically connected with the interior compartment. Hydraulically connected according to the invention means being connected in a way that a liquid can flow inside the connection such that liquid pressure can be used to drive aspiration and dispensing of liquids.

A recess towards the center of the body is integrated in the pipette tip adapter on the proximal side. The proximal side is defined as being the side facing the pipetting device, while the distal side is defined as being the side facing the pipette tip.

The recess is arranged such that the first opening is an integral part of the recess and such that the recess and the first opening are in connection. The connection is such that the continuous flow path formed by the first opening and the recess is prolonged by the continuous pipetting channel of the pipetting device. The cross section of the continuous flow path can be of any round shape, e.g., circular or oval, or can be of any angular shape, e.g., square or hexagonal, or a mix of round and angular shapes, e.g., U-shaped or D-shaped.

A liquid container according to the invention may be a reaction tube, a test tube, a multi-well plate, a titer plate, or any other container for holding liquids.

The pipette tip adapter according to the invention may be used in connection with a pipette tip or any other device. Pipette tips that may be used with the pipette tip adapter according to the invention may be any disposable or reusable tips available. Disposable tips are usually made of plastic material, e.g., polypropylene or medical grade polystyrene, or for conductivity the plastic material may comprise graphite. Reusable tips, e.g., syringe needles, may be made of metal, glass, synthetic material, or a combination of materials.

While the primary purpose of the pipette tip adapter is the enlargement of pipetting volumes of disposable pipette tips, the pipette tip adapter according to the invention is designed in such a way that it may be used to pick up any pipette tip, labware, or tool, e.g., a cannula or a syringe needle. A device other than a pipette tip may be any tool or an instrument suitable for piercing tube caps or septa.

The connection at the tube section may be secured through friction fit, the bond may include any one or a combination of the following principles: interference fit, press fit, force or form closure, friction, bayonet lock, screwed joint, snap locks, clamps, bolts, magnets. A syringe needle may comprise a female Luer-Lock fitting which forms a leak-free connection through friction fit or alternatively is screwed into a male Luer-Lock fitting at the tube section.

In an embodiment of the pipette tip adapter, in which the tube section comprises two or more different outer diameters, the connection of a syringe needle or any other device with a smaller diameter to the tube section of the pipette tip adapter may take place further away from the body, where the tube section has a smaller diameter compared to the position closer to the body. In the embodiment of the pipette tip adapter, in which the tube section comprises two or more different outer diameters, two or more pieces of equipment with different interior diameters may be attached to the tube section in a sequential manner.

According to an embodiment, the pipette tip adapter may comprise a filter. This filter may be arranged within the recess towards the center of the body for reversibly attaching the pipette tip adapter to a pipetting device. In an embodiment the filter is positioned such that the gas entering the recess must pass the filter before reaching the interior compartment of the body through the first opening. Gas from the exterior space entering the pipette tip adapter through the first opening and the continuous flow path therefore passes the filter. The filter according to the invention may be a high-efficiency particulate air (HEPA) filter, such that any gas streaming into the interior compartment of the body is cleaned from particulates and aerosols, including nucleic acids, proteins, and microorganisms like viruses, bacteria, fungi, and spores. Known HEPA filters are mechanical air filters made of a fine mesh. According to the invention, the filter may comprise pores smaller 0.35 µm in diameter, preferably between 0.3 and 0.25 µm in diameter, in which case most microorganisms are captured while allowing enough air passage. According to an embodiment, the filter may have antimicrobial properties, thus inhibiting the growth of microorganisms such as bacteria, fungi, mold spores and other airborne contaminates. According to an embodiment, the air filter may have affinity to DNA and/or RNA, thereby protecting the interior compartment of the body from such contaminants. According to an embodiment, the air filter captures aerosols.

The pipette tip adapter according to the invention comprises a body forming an interior compartment for holding a liquid. In an embodiment of the pipette tip adapter, the body comprises an outer casing, a cover, and an internal wall. The internal wall may be in the form of a hollow open cylinder, cube, cuboid, square cuboid, prism, or any hollow open three-dimensional configuration resembling a cup. The internal wall may be in the form of a cup.

According to the invention these three parts, namely the outer casing, the cover, and the internal wall, may be held together by one or a combination of the following principles: welding, gluing, interference fit, press fit, force or form closure, friction, bayonet lock, screwed joint, snap locks, clamps, bolts, magnets.

In an embodiment, the pipette tip adapter further comprises a distance element that holds the internal wall in place and is arranged such that liquid within the body does not enter the recess and the pipetting channel when the axes of the pipette tip, the tube section, the recess, and the pipetting channel are essentially vertical, with the proximal opening towards the top. The distance elements may be configured as elongated distance bars that extend continuously from the proximal opening of the internal wall towards the opposite distal end along the axes of the tube section and the recess. The distance elements according to the invention may become wider towards the distal end, which may improve and secure the reversible bond to the cover by friction fit.

In an embodiment in which the pipette tip adapter according to the invention is arranged in an essentially vertical alignment with regard to the axes of the tube section and the recess, and with the proximal opening towards the top, the liquid within the body does not reach and flow into the gap forming the continuous flow path, which is delimited by the internal wall, the surface of the cover, and two distance elements, ending in the first opening in fluid connection with the recess.

In an embodiment of the pipette tip adapter, the pipette tip adapter can reversibly be secured to the connecter of the pipetting device, e.g., by friction-fit or anyone or a combination of the following principles: interference fit, press fit, force or form closure, friction, bayonet lock, screwed joint, snap locks, clamps, bolts, magnets.

When in use the pipette tip adapter according to the invention must be aligned so that the axes of the pipette tip or other tool attached, the tube section, the recess, and the pipetting channel are essentially vertical, so that liquid within the body does not enter the recess and the pipetting channel by flowing through the first opening.

According to an embodiment of the pipette tip adapter the pipetting channel may be a component of a robotic arm in an automated pipetting system, or any other pipetting device including manual handheld pipettes. The pipetting channel according to the invention allows the transfer of negative and positive pressure to the attached pipette tip adapter allowing liquids to be aspirated from and dispensed to liquid containers and other lab disposables.

In an embodiment, the pipette tip adapter according to the invention is part of an automated pipetting system with a robotic arm, also called liquid handling platform. Such an automated pipetting system may further comprise a pipetting head mounted to the robotic arm, which allows parallel pipetting through multiple pipetting channels. These pipetting channels may end in connectors, whereas after the reversible mounting of pipette tip adapters, they are in fluid communication with the recesses, continuous flow paths, and interior compartments of the pipette tip adapters according to the invention.

In an embodiment, arrays of pipette tip adapters in racks may be stacked on top of each other and may be used in an automated pipetting system according to the invention.

A pipetting device according to the invention can be any manual or automated pipetting device. It comprises at least one pipette tip connector to which a pipette tip or the pipette tip adapter may be reversibly attached when the pipetting device is in use. Automated pipetting systems may be used in medical, chemical, analytical or pharmaceutical laboratories where they enable a rapid and reliable processing of large quantities of individual samples.

One or more robotic arms are usually used for the fully automated operation of such laboratory systems, including for example optical measurements, pipetting, washing, centrifuging, incubating and filtering. A robotic arm of an automated pipetting device may hold a multi-channel pipetting head such as an 8-tip linear or 96-tip rectangular array. For such devices the spacing of entry ports is typically 9mm or 4.5mm, and the arrays are typically of 96 (8 x 12) or 384 (16 x 24) corresponding to the positions of the wells of a standard well plate, however these ports may also be of 24 (4 x 6), or in the pattern of a 1536-well plate, which has a spacing of 2.25mm and consists of 32x48 elements. They may also be placed in an arbitrary pattern for manual use or use with custom devices. Such a device allows the simultaneous pipetting of a row of a well plate or of a complete well plate.

The pipetting device may be driven by a working medium and may comprise positive and/or negative pressure sources. Typically, a pipetting device comprises a flow connection between the one or more pipette connectors and the one or more pressure sources. A multiple pipetting head may be driven with a single common pressure source. For use with a gaseous working medium the flow connection may be built as a gas flow connection.

According to the invention conventional pipette tips may be mounted to the pipette tip adapters on the pipetting head. They allow pipetting liquid in and out of liquid containers placed in a rack on the platform that is part of the automated pipetting system.

According to the invention, any reversible bond in or at the pipette tip adapter according to the invention may be based on any or a combination of the following principles: interference fit, press fit, force or form closure, friction, bayonet lock, screwed joint, snap locks, clamps, bolts, magnets.

The pipetting device may be equipped with a measuring unit in connection with a liquid processing system for doing one or both of the following: Firstly, measuring a volume of liquid processed, i.e., aspirated or dispensed, during a pipetting process, and secondly, detecting liquid levels (i.e., a gas-liquid phase boundary) in liquid containers. Most laboratory applications require precise pipetting operations to obtain a satisfactory analytical accuracy. Consequently, accurate knowledge of the processed sample volumes or fluid volumes is of critical importance. Known volume measurement techniques make use of the variable impedance and/or capacitance values resulting from the electrodes incorporated into the design. A known method of capacitive liquid level detection (cLLD) can be used to determine the aspirated and dispensed volume, and for detecting liquid levels in liquid containers. Such a calculation is based on the differences in capacitance at different states of the pipetting process, i.e., before touching the liquid in the liquid container, after immersion of the pipette tip into the liquid, and at different fill levels of the pipette tip and pipette tip adapter. For precise results, the cross-sectional areas of both pipette tip and pipette tip adapter must be recorded and/or reference data has to be generated. The pipette tip adapter according to the invention may therefore comprise one or more electrodes for capacitive liquid level detection (cLLD).

In an embodiment, the pipette tip adapter comprises a conductive tab, which in combination with conductive and nonconductive parts of the body allows the detection of liquid levels in liquid containers while moving a pipette tip towards and into the liquid and allows measuring the volume of the aspirated liquid based on absolute capacitance. For that purpose, the pipette tip adapter comprises a conductive tab that is arranged in part in between the internal wall and the cover and aligned along the proximal-distal axis and with its proximal part aligned radially from the proximal part of the internal wall towards the outer casing. The end may be bent or formed such that the tip points towards the distal side whereby the surface of the conductive tab facing the outer casing is enlarged. The conductive tab, which serves as an electrode of a measuring capacitor and allows capacitive coupling, however, is neither in physical nor in electric contact with the outer casing. In an embodiment the pipette tip adapter comprises an electrically conductive tab that is aligned in part radially from the proximal end of the internal wall towards the outer casing without contacting it galvanically. According to the invention, a galvanic connection allows electric current to flow by permitting a direct conduction path, while galvanic separation (or isolation) refers to the fact that the output power circuit is electrically and physically isolated from the input power circuit. In other words, without contacting it galvanically means to prevent current flow so that no direct conduction path is permitted. Energy or information however can still be exchanged between the sections by other means, such as capacitive, inductive, radiative, optical, acoustic or mechanical.

The air in between the conductive tab and the conductive outer casing serves as a dielectric of the capacitor. Small volumes can be determined with high accuracy, even when the two electrodes of the measuring capacitor have an arbitrary shape. However, the precise relationship between the capacitance of the measuring capacitor as a function of the sample volume must be determined beforehand.

In an embodiment, the pipette tip adapter comprises a conductive outer casing comprising one or more conductive materials, and a nonconductive cover and internal wall consisting of one or more nonconductive materials, acting as dielectric materials between the two electrodes. The non-conductive parts serve as a dielectric of the measuring capacitor, while the parts comprising one or several conductive materials form the electrodes for capacitive coupling. Accordingly, the conductive tab, which is at least partially coated with an electrically conductive material or consists of one or more electrically conductive materials, forms an electrode for capacitive coupling. The sample liquid being aspirated or dispensed, respectively, serves as a liquid extension of the electrode of the measuring capacitor. Depending on the quantity of the sample liquid within the pipette tip adapter, the capacitance of this measuring capacitor changes and the volume of the aspirated or dispensed sample liquid, respectively, can be accurately determined by means of the measuring unit. For this purpose, however, the sample liquid must have a minimal conductivity. Any water-based liquid except for de-ionized and pure distilled water, respectively, which are nonconductive, will be conductive, while oil or organic liquid-based liquids like acetone, acetonitrile, mineral oil, vegetable oil, and diesel fuel are non-conducting. Even non-conductive liquids can be measured. In those cases, the liquid is acting as a dielectric. The change of the electric permittivity from air to liquid results in a change of the measured impedance. If the permittivity of the liquid is known the aspirated volume can be determined.

According to an embodiment of the pipette tip adapter, the body further comprises one or more depots of active substances. Active substances according to the invention may be chemicals or micro-organisms, including active pharmaceutical ingredients (API) and natural products, e.g., enzymes. The depots may comprise active substances in lyophilized, dried, or liquid form, or alternatively bound to any surface or particle, e.g., to magnetic beads. They may be positioned in the interior compartment prior to use of the pipette tip adapters.

Although the foregoing invention has been described in some detail for the purpose of illustration, it will be obvious that changes and modifications may be practiced within the scope of the appended claims by those of ordinary skill in the art.

The solution according to the invention, at least in preferred embodiments, inter alia achieves the following advantages:
The pipette tip adapter according to the invention provides a tool for pipetting large volumes of liquids that exceed the capacity of disposable pipette tips in and out of tubes. The adapter according to the invention allows the use of narrow conventional pipette tips in combination with the adapter to enable pipetting in and out of tubes that are too narrow for conventional large volume pipette tips.

In addition, the pipette tip adapter according to the invention allows a compact design that shortens the dimension along the longitudinal axis and thereby enables a high packaging density. As a result, reaction tubes, tips, and pipette tip adapters can be placed on a liquid handling platform without having to use lower decks.

The pipette tip adapter according to the invention further allows avoiding repeated pipetting with a small volume tip, e.g., 1 ml or 0.5 ml, having the advantage of speeding up and shorten the liquid handling process while at the same time limiting the risk for cross-contamination. Consequently, this leads to a more efficient procedure in terms of labor and time and therefore lower operating costs.

Moreover, the pipette tip adapter according to the invention allows the use of a tool for de-capping tubes or plates, or piercing tube caps or septa, e.g., with a syringe needle.

Another major advantage comes from the fact the pipette tip adapter according to the invention permits the monitoring of precise pipetting operations by measuring the aspirated and dispensed volumes and by detecting liquid levels in liquid containers. This may be achieved through capacitive liquid level detection (cLLD) and calculations based on the differences in absolute capacitance at different states of the pipetting process.

Finally, the pipette tip adapter according to the invention can be easily combined with an automated pipetting system, allowing workflows to be processed in a short period of time without the risk for cross-contamination and without having to clean and sterilize workbench and equipment between samples.

Furthermore, advantages and conveniences of the invention result from the following description of embodiments based on the drawings.

The invention will be described in detail with respect to the drawings schematically depicting embodiments of the invention. These are for illustrative purposes only and are not to be construed as limiting. In detail:
- Fig. 1: shows schematic full sectional views of an embodiment of a pipette tip adapter for connecting a pipette tip with a pipetting device, and
- Fig. 2: shows schematic full sectional views of an embodiment of a pipette tip adapter comprising an outer casing, a cover, and an internal wall, and
- Fig. 3: shows excerpts of drawings of the internal wall in the form of a cup, alone and attached to the cover, and
- Fig. 4: shows sectional and perspective exploded views of an embodiment of a pipette tip adapter comprising an outer casing, a cover, and an internal wall, and
- Fig. 5: shows schematic full sectional views of embodiments of a pipette tip adapter comprising an outer casing, a cover, an internal wall, and an electrically conductive tab, and
- Fig 6: shows drawings of pipette tip adapters according to the invention next to large volume pipette tips in the prior art, and
- Fig. 7: shows a schematic full sectional view of an automated pipetting system with robotic arms comprising pipette tip adapters according to the invention.

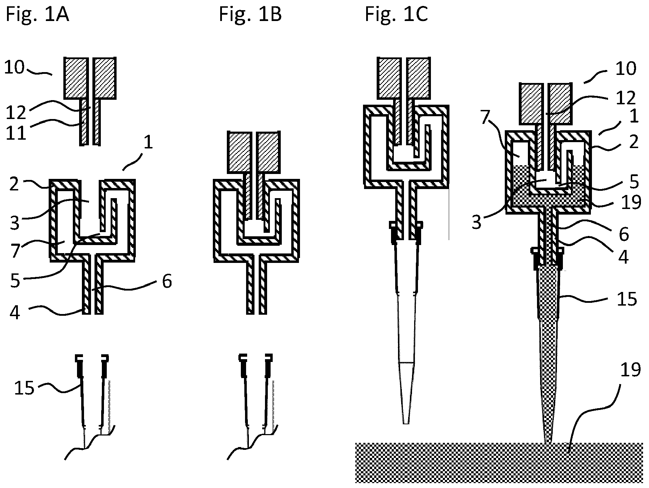

**Fig. 1** shows schematic full sectional views of an embodiment of a pipette tip adapter 1 for connecting a pipette tip 15 with a pipetting device 10. The pipette tip adapter 1 shown comprises a body 2 forming an interior compartment 7 for holding a liquid 19. In the embodiment shown, the body 2 is made of one piece. The pipette tip adapter 1 further comprises a first opening 5 and a second opening 6 located on opposite sides of the body 2. A tube section 4 is part of the body 2 and comprises the first opening 5. It is formed such that a pipette tip 15 or any other tool can reversibly be secured to the pipette tip adapter 1, e.g., by friction fit as shown here. A recess 3 towards the center of the body 2 is integrated in the pipette tip adaptor 1 on the opposite side of the body 2 in relation to the tube section 4. This recess 3 is arranged such that the first opening 5 is an integral part of the recess 3 and such that the recess 3 and the first opening 5 are in connection. The recess 3 allows the reversible attachment of the pipette tip adapter 1 to the connecter 11 of a pipetting device 10, e.g., by friction fit as shown here.

In **Fig. 1A****,** the pipette tip adapter 1 is separated from the pipetting device 10 and the pipette tip 15. In **Fig. 1B****,** the pipette tip adapter 1 is reversibly secured to the connecter 11 of the pipetting device 10. In the embodiment shown this reversible bond is the result of friction-fit, however anyone or a combination of the following principles may be used; interference fit, press fit, force or form closure, friction, bayonet lock, screwed joint, snap locks, clamps, bolts, magnets. The connection is such that the continuous flow path formed by the first opening 5 and the recess 3 is prolonged by the continuous pipetting channel 12 of the pipetting device 10. The pipetting channel 12 according to the invention may be a component of a robotic arm 101 in an automated pipetting system 100 (not shown), or any other pipetting device 10 including manual handheld pipettes. The pipetting channel 12 allows the transfer of negative and positive pressure to the attached pipette tip adapter 1 allowing liquids to be aspirated from and dispensed to liquid containers 17 and other lab disposables (not shown).

In **Fig. 1C****,** the pipette tip adapter 1 is reversibly secured to the connecter 11 of the pipetting device 10 at the recess 3 and is reversibly joined with a pipette tip 15 at the tube section 4 by friction fit. This assembly including the pipette tip adapter 1 according to the invention is shown above a source of liquid 19 on the left and after the immersion of the pipette tip 15 into the liquid 19 and subsequent aspiration of liquid 19 into the pipette tip 15 and into the pipette tip adapter 1 on the right.

In the embodiment shown one or more continuous flow paths 8 connect the inner volume of the recess 3 with the interior compartment 7 of the body 2, such that the one or more continuous flow paths 8 are arranged along the recess 3 from the first opening 5 in the center of the body 2 towards the periphery of the body, such that liquid 19 in the interior compartment 7 does not enter the volume of the recess 3 when the pipette tip adapter 1 is arranged above the pipette tip adapter 1. In other words, the axes of the pipette tip 15, the tube section 4, the recess 3, and the pipetting channel 12 are essentially vertical, so that liquid within the body 2 does not enter the recess 3 and the pipetting channel 12.

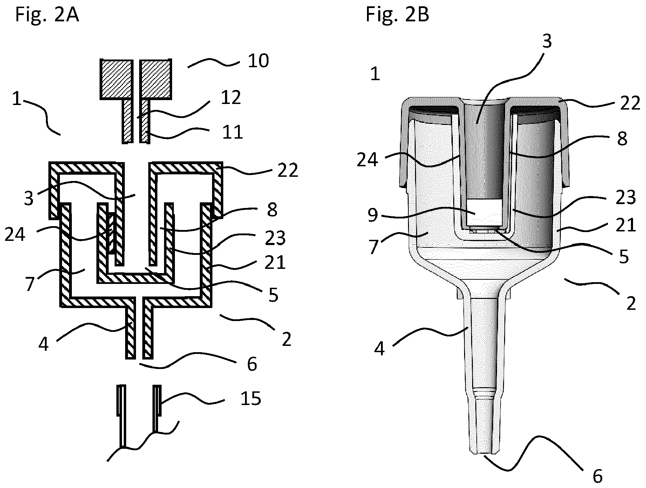

**Fig. 2A** shows a schematic full sectional view of an embodiment of a pipette tip adapter 1 for connecting a pipette tip 15 with a pipetting device 10 according to the invention comprising a body 2 forming an interior compartment 7 for holding a liquid 19. The embodiment shown comprises a body 2 with an outer casing 21, a cover 22, and an internal wall 23 in the form of a cup. The pipette tip adapter 1 further comprises a distance element 24 that holds the internal wall 23 in place, so that liquid within the body 2 does not enter the recess 3 and the pipetting channel 12. A first opening 5 and a second opening 6 are located on opposite sides of the body 2, arranged such that they are connected by a continuous flow path 8. A tube section 4 is part of the body 2. It comprises the second opening 6 and is formed such that a pipette tip 15 or any other tool can reversibly be secured to the pipette tip adapter 1, e.g., by friction fit as shown here. A recess 3 towards the center of the body 2 is integrated in the pipette tip adapter 1 on the opposite side of the body 2 in relation to the tube section 4. This recess 3 is arranged such that the first opening 5 is an integral part of the recess 3 and such that the recess 3 and the first opening 5 are in connection. The recess 3 allows the reversible attachment of the pipette tip adapter 1 to the connecter 11 of a pipetting device 10.

The pipette tip adapter 1 as shown is separated from the pipetting device 10 and the pipette tip 15, shown schematically. The pipette tip adapter 1 can reversibly be secured to the connecter 11 of the pipetting device 10, e.g., by friction fit as shown here.

In the embodiment shown the axes of the pipette tip 15, the tube section 4, the recess 3, and the pipetting channel 12 are essentially vertical, so that liquid within the body 2 does not enter the recess 3 and the pipetting channel 12 by flowing through the first opening 5.

The pipetting channel 12 according to the invention may be a component of a robotic arm 101 in an automated pipetting system 100 (not shown), or any other pipetting device 10 including manual handheld pipettes. The pipetting channel 12 allows the transfer of negative and positive pressure to the attached pipette tip adapter 1 allowing liquids to be aspirated from and dispensed to liquid containers 17 and other lab disposables.

**Fig. 2B** shows a full sectional view of a pipette tip adapter 1 as described for Fig. 1A in an embodiment comprising an additional filter 9 arranged within the recess 3. The filter 9 is positioned such that the gas entering the recess 3 must pass the filter 9 before reaching the first opening 5. In the embodiment shown, gas from the exterior space entering the body 2 through the first opening 5 and the continuous flow path 8 has therefore passed the filter 9. The filter 9 according to the invention may be a high-efficiency particulate air (HEPA) filter 9, such that any gas streaming into the interior compartment 7 of the body 2 is cleaned from particulates and aerosols, including contaminants like microorganisms. Thus, the filter 9 protects the interior compartment 7 as well as the one or more continuous flow paths 8 and the liquid 19 from contamination during pipetting.

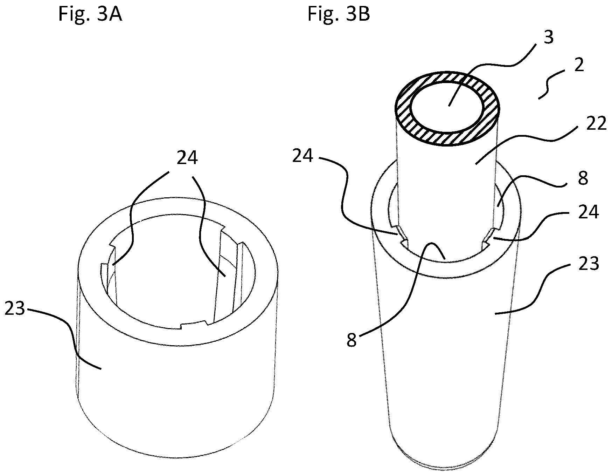

**Fig. 3A** shows the excerpt of a drawing of the internal wall 23 in the form of a cup comprising a distance element 24 for holding the internal wall 23 in place, so that liquid within the body 2 does not enter the recess 3 and the pipetting channel 12.

The distance elements 24 shown are configured as elongated distance bars that extend continuously from the visible proximal opening towards the distal part. In the embodiment shown the distance elements 24 become wider towards the distal part. This feature may improve and secure the reversible bond to the cover 22 by friction fit.

**Fig. 3B** shows the excerpt of a drawing of the internal wall 23 in the form of a cup attached to the cover 22. The internal wall 23 comprises distance elements 24 for bonding to the cover 22 by friction-fit and for holding the internal wall 23 in place. When arranged in an essentially vertical alignment, with the visible proximal opening towards the top, liquid within the body 2 does not reach and flow into the gap forming the continuous flow path 8, which is delimited by the internal wall 23, the surface of the cover 22, and two distance elements 24, and ends in the first opening 5 (not shown) in fluid connection with the recess 3.

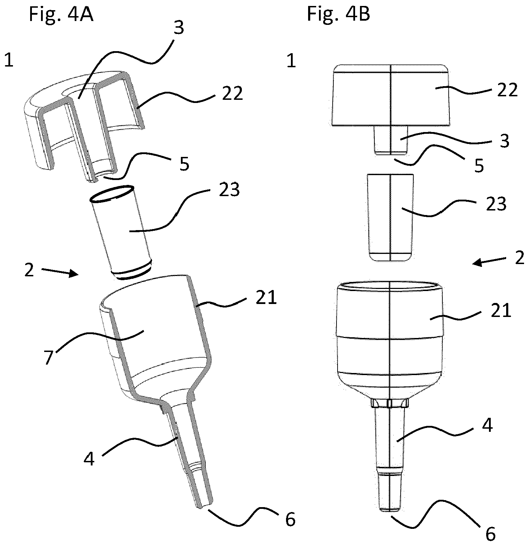

**Fig. 4A** shows a full sectional exploded view and **Fig. 4B** shows a perspective exploded view of an embodiment of a pipette tip adapter 1 comprising an outer casing 21, a cover 22, and an internal wall 23. In the embodiment shown, the body 2, forming an interior compartment 7 for holding a liquid 19, comprises an outer casing 21, a cover 22, and an internal wall 23 in the form of a cup. A tube section 4 is part of the outer casing 21. It comprises a second opening 6 and is formed such that a pipette tip 15 or any other tool can reversibly be secured to the pipette tip adapter 1, e.g., by friction fit as shown here. A recess 3 towards the center of the body 2 is integrated in the pipette tip adapter 1 on the opposite side of the body 2 in relation to the tube section 4. This recess 3 is arranged such that the first opening 5 is an integral part of the recess 3 and such that the recess 3 and the first opening 5 are in connection. The recess 3 allows the reversible attachment of the pipette tip adapter 1 to a connecter 11 of a pipetting device 10 (not shown), e.g., by friction fit. The first opening 5 and second opening 6 are arranged such that they are connected by a continuous flow path 8 (not shown). In the embodiment shown the axis of symmetry of the tube section 4, the internal wall 23, and the recess 3 are essentially vertical, so that liquid 19 within the outer casing 21 of the body 2 does not enter the internal wall 23 in the form of a cup and therefore does not enter the recess 3 by flowing through the first opening 5.

According to the invention the three major parts shown here, namely the outer casing 21, the cover 22, and the internal wall 23, may be hold together by one or a combination of the following principles: welding, gluing, interference fit, press fit, force or form closure, friction, bayonet lock, screwed joint, snap locks, clamps, bolts, magnets.

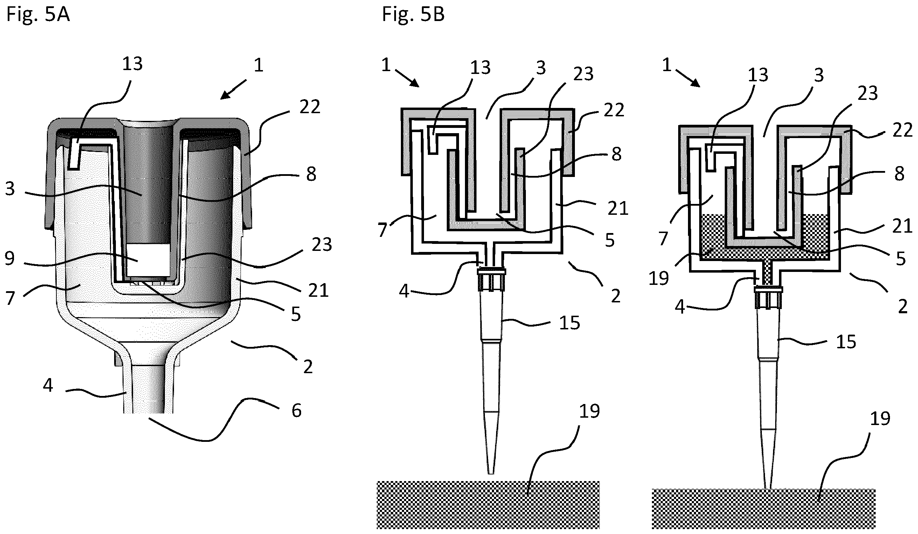

**Fig. 5** shows schematic full sectional views of an embodiment of a pipette tip adapter 1 according to the invention comprising an outer casing 21, a cover 22, an internal wall 23, and an electrically conductive tab 13. In the pipette tip adapter 1 shown here, the embodiment as described and shown in Fig. 2B further comprises a conductive tab 13, which in combination with conductive and nonconductive parts allows measuring the volume of the aspirated liquid 19 based on absolute capacitance and/or impedance. For that reason, the outer casing 21 comprises one or more conductive materials making it conductive, while the cover 22 and the internal wall 23 consist of one or more nonconductive materials. The embodiment according to the invention shown in **Fig. 5A** further comprises a filter 9 arranged within the recess 3. The filter 9 shown is arranged such that the gas entering the recess 3 must pass the filter 9 before reaching the first opening 5. In the embodiment with the filter 9, gas from the exterior space entering the body 2 through the first opening 5 and the continuous flow path 8 has therefore passed the filter 9. The filter 9 according to the invention may be a high-efficiency particulate air (HEPA) filter 9, such that any gas streaming into the interior compartment 7 of the body 2 is cleaned from particulates and aerosols, including contaminants like microorganisms.

**Fig. 5B** shows schematic full sectional views of an embodiment of a pipette tip adapter 1 according to the invention comprising a conductive outer casing 21 (no fill = white), a nonconductive cover 22 (grey fill), a nonconductive internal wall 23 (grey fill), an electrically conductive tab 13 (no fill = white), and an electrically conductive pipette tip 15. This setup with a combination of conductive (no fill = white) and nonconductive (grey) parts allows measuring the volume of the aspirated liquid 19 based on absolute capacitance and/or impedance. While the view on the left shows the pipette tip adapter 1 before aspirating any liquid 19, the view on the right shows the same embodiment after aspiration of liquid 19. The recess 3 allows the reversible attachment of the pipette tip adapter 1 to a connecter 11 of a pipetting device 10 (not shown). As shown one or more continuous flow paths 8 connect the inner volume of the recess 3 with the interior compartment 7 of the body 2, such that the one or more continuous flow paths 8 are arranged along the recess 3 from the first opening 5 in the center of the body 2 towards the periphery of the body, such that liquid 19 in the interior compartment 7 does not enter the volume of the recess 3 when the pipette tip adapter 1 is arranged above the pipette tip adapter 1.

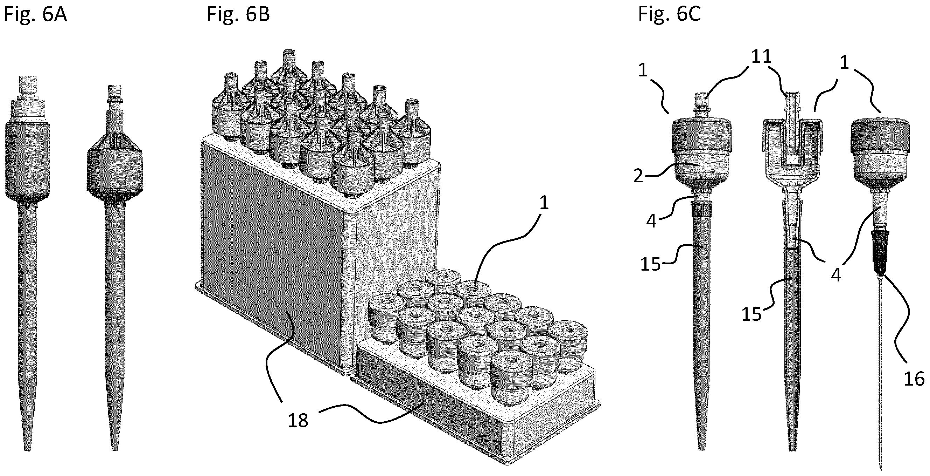

**Fig 6A** shows two embodiments of large volume pipette tips as described in the prior art. These large volume pipette tips contain a lower portion that is elongated and being sized and shaped for insertion into a liquid container 17, while their central portion is enlarged with a width significantly greater than the diameter of the lower portion. This allows the pipette tip to hold a larger volume of liquid 19 compared with a conventional pipette tip 15, however they are much wider and longer making them unsuitable for most worktables and automated pipetting systems 100 due to their large footprint and height, as can be seen in Fig 6B.

**Fig 6B** shows a perspective view of an array of an embodiment of a pipette tip adapter 1 in a rack 18 (front) next to large volume pipette tips as described in the prior art in a rack 18 (back). The dimensions required by large volume pipette tips in the prior art prevent packaging at high densities and thereby limit their use on worktables of automated pipetting systems 100, where the distance between worktable and pipetting head 102 is very limited. The pipette tip adapter 1 according to the invention allows to increase the maximum volume that can be transferred with one pipette tip 15, while able to access primary liquid containers 17 and allowing for a high packaging density in three dimensions.

**Fig 6C** shows perspective views and a schematic full sectional view of an embodiment of a pipette tip adapter 1 as described and shown in detail in Fig. 2B. A pipette tip 15 is mounted to the pipette tip adapters 1 shown in the center and on the left, while a syringe needle 16 is attached to the pipette tip adapter 1 on the right. In the embodiment shown, the pipette tip 15 is attached to the tube section 4 through friction fit in a position close to the body 2. When mounting a different pipette tip 15, any tool, or a syringe needle 16 as shown on the right, the connection to the tube section 4 can take place further away from the body 2, where the tube section 4 has a smaller diameter compared to the position closer to the body 2. Shown on the right is a syringe needle 16 with a Luer fitting, which as shown makes the connection to the tube section 4 through friction fit (Luer Slip connection). The bond however may include one or a combination of the following principles: interference fit, press fit, force or form closure, friction, bayonet lock, screwed joint, snap locks, clamps, bolts, magnets. The views in the center and on the left also show a schematic representation of a connecter 11, which may be part of a robotic arm 101 and/or pipetting head 102 in an automated pipetting system 100 (not shown).

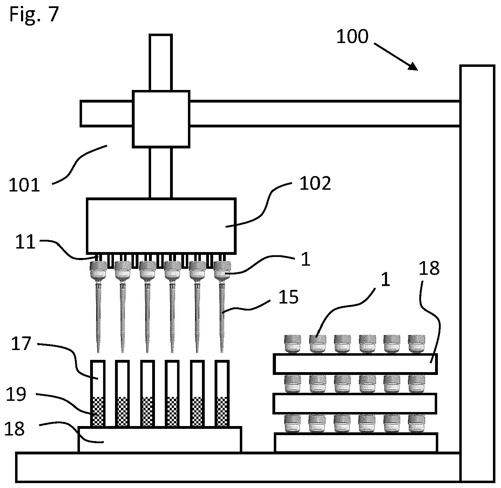

**Fig. 7** shows a schematic full sectional view of an automated pipetting system 100 with a robotic arm 101 comprising pipette tip adapters 1 according to the invention. The automated pipetting system 100 shown further comprises a pipetting head 102 mounted to the robotic arm 101, which allows parallel pipetting through multiple pipetting channels 12. These pipetting channels 12 end in the connectors 11 shown, whereas after the reversible mounting of pipette tip adapters 1, they are in fluid communication with the recesses 6, continuous flow paths 8, and interior compartments 7 (not shown) of the pipette tip adapters 1 according to the invention. Conventional pipette tips 15 are mounted to the pipette tip adapters 1 on the pipetting head 102. They allow pipetting liquid 19 in and out of liquid containers 17 placed in a rack 18 on the platform that is part of the automated pipetting system 100. A stack of three layers of arrays of pipette tip adapters 1 in racks 18 is shown on the right of the platform, illustrating one advantage of the pipette tip adapters 1 regarding the high packaging density in three dimensions, most importantly in the vertical dimension, which allows automatic mounting to the robotic arm 101 even when the distance between the platform and pipetting head 102 in an automated pipetting system 100 is limited. Alternatively, the pipette tip adapters 1 may be stacked on the platform without the use of any racks 18.

Incidentally it is also possible to implement the invention in a large number of variations in the examples shown herein and aspects of the invention highlighted above.

### LIST OF REFERENCE SIGNS

- 1: pipette tip adapter
- 2: body
- 21: outer casing
- 22: cover
- 23: internal wall
- 24: distance element
- 3: recess
- 4: tube section
- 5: first opening
- 6: second opening
- 7: interior compartment
- 8: continuous flow path
- 9: filter
- 10: pipetting device
- 11: connecter
- 12: pipetting channel
- 13: electrically conductive tab
- 15: pipette tip
- 16: syringe needle
- 17: liquid container
- 18: rack
- 19: liquid
- 100: automated pipetting system
- 101: robotic arm
- 102: pipetting head

## Claims

1. A pipette tip adapter (1) detachably connectable between a pipetting device (10) and a pipette tip (15), comprising:
a body (2) with an interior compartment (7) for holding a liquid (18),
a recess (3) entering into a part of the body (2) for detachably receiving a connector (11) of the pipetting device (10) and having a frist opening (5) pneumatically connected with the interior compartment (7),
a tube section (4) projecting from the pipette tip adapter (1) detachably securable with a pipette tip (15) and having a second opening (6) hydraulically connected with the interior compartment (7).

2. The pipette tip adapter (1) according to claim 1, wherein one or more continuous flow paths (8) connect the inner volume of the recess (3) with the interior compartment (7) of the body (2), such that the one or more continuous flow paths (8) are arranged along the recess (3) from the first opening (5) in the center of the body (2) towards the periphery of the body, such that liquid (18) in the interior compartment (7) does not enter the volume of the recess (3) when the pipette tip adapter (1) is arranged above the pipette tip adapter (1).

3. The pipette tip adapter (1) according to any of claims 1 and 2, wherein the body (2) comprises an outer casing (21), a cover (22), and an internal wall (23).

4. The pipette tip adapter (1) according to claim 3, wherein the outer casing (21) and the cover (22) are joined by interference fit, and the cover (22) and the cup (23) are joined by interference fit.

5. The pipette tip adapter (1) according to any of claims 3 and 4, wherein the internal wall (23) is in the form of a cup.

6. The pipette tip adapter (1) according to any of claims 3 to 5, wherein the internal wall (23) or the cover (22) comprise one or more distance elements (24) to hold the internal wall (23) in place and arranged such that one or more continuous flow paths (8) are formed from the first opening (5) to the interior compartment (7).

7. The pipette tip adapter (1) according to claim 6, wherein at least one distance element (24) is an integral part of the internal wall (23) or the cover (22).

8. The pipette tip adapter (1) according to any of claims 6 and 7, wherein at least one distance element (24) is configured as elongated distance bar that extend continuously from a proximal opening of the internal wall towards a distal end along the axis of the recess (3).

9. The pipette tip adapter (1) according to any of claims 3 to 8, wherein the outer casing (21) is electrically conductive, whereas the cover (22) and the internal wall (23) are electrically non-conductive for measuring liquid volumes based on absolute capacitance and/or impedance.

10. The pipette tip adapter (1) according to claim 9, comprising an electrically conductive tab (13) arranged in part along a proximal-distal axis in between the internal wall (23) and the cover (22).

11. The pipette tip adapter (1) according to claim 10, wherein the electrically conductive tab (13) is aligned in part radially from the proximal end of the internal wall (23) towards the outer casing (21) without contacting it galvanically.

12. The pipette tip adapter (1) according to one of the preceding claims, wherein a filter (9) is placed within the recess (3), such that gas entering the recess (3) must pass the filter (9) before reaching the interior compartment (7) through the first opening (5).

13. The pipette tip adapter (1) according to one of the preceding claims, wherein the interior compartment (7) of the body (2) further comprises one or more depots of active substances.

14. Use of a pipette tip adapter (1) according to any preceding claim in an automated pipetting system (100).

15. Automated pipetting system (100) comprising a pipette tip adapter (1) according to any of claims 1 to 13 for preparing liquid reactions.
